# EUROPÄISCHE PATENTSCHRIFT

(11) **EP 0 520 208 B1**
(45) Veröffentlichungstag und Bekanntmachung des Hinweises auf die Patenterteilung: **08.02.1995**
(21) Anmeldenummer: 92109164.1
(22) Anmeldetag: 30.05.1992
(51) Int. Cl.: F16K 27/06

(54) **Absperrorgan mit Innenausskleidung**
Shut-off device with inner lining
Dispositif d'arrêt avec revêtement interne

(30) Priorität: 30.05.1991 DE 4117714
(43) Veröffentlichungstag der Anmeldung: 30.12.1992
(73) Patentinhaber: ITT Richter Chemie-Technik GmbH, D-47906 Kempen (DE)
(72) Erfinder: Hatting, Paul, W-4152 Kempen (DE); Laufs, Bernhard, W-4152 Kempen (DE)
(74) Vertreter: COHAUSZ HASE DAWIDOWICZ & PARTNER

(56) Entgegenhaltungen:
- DE-A- 2 636 459
- DE-A- 2 804 676
- DE-B- 1 947 306
- DE-U- 1 876 810
- DE-U- 8 112 736
- US-A- 3 336 939

## Beschreibung

Die Erfindung betrifft ein Absperrorgan mit den Merkmalen des Oberbegriffs des Anspruchs 1.

Es ist bekannt, das Innere von Absperrorganen insbesondere von Kugelhähnen mit einer widerstandsfähigen Schicht insbesondere aus Kunststoff auszukleiden, um aggressive Medien führen zu können. Um das Gehäuse öffnen zu können, ist ein Anschlußstutzen als Teil des Gehäuses am übrigen Gehäuse angeschraubt, der mit einer Flanschfläche auf einer entsprechend geformten Flanschfläche des übrigen Gehäuses aufliegt. Solche Absperrvorrichtungen werden beispielsweise in der deutschen Offenlegungsschrift DE-OS 26 36 459 oder dem deutschen Gebrauchsmuster DE 81 12 736 U1 beschrieben. Aus dieser Schrift ist es bekannt, daß beide Flanschflächen auch mit einer Kunststoffschicht bedeckt sind, so daß im Bereich des Flansches zwei Kunststoffschichten abdichtend aufeinanderliegen.

Da die Anschlußstutzen für eine ausreichende Dichtigkeit verhältnismäßig stark angeschraubt werden müssen, werden die Kunststoffschichten im Bereich der Flanschflächen stark gepreßt, so daß sie häufig mehr oder weniger nachgeben, insbesondere teilweise wegfließen. Hierdurch ist die Stellung des Anschlußstutzens nicht genügend genau definiert gegenüber dem übrigen Gehäuse, so daß es zu Lager- und Abdichtungsproblemen kommt.

Aus der DE-A-28 04 676 ist ein Absperrorgan bekannt, mit einem Stellglied, einem das Stellglied umgebenden, eine Flanschfläche aufweisenden Gehäuse und mit einem den Innenraum des Gehäuses verschließenden Abschlußstutzen, der eine der Flanschfläche des Gehäuses zugeordnete Flanschfläche aufweist. Der Innenraum und die Flanschfläche des Gehäuses sind mit einer widerstandsfähigen Schicht versehen. Die Flanschflächen sind als sich im wesentlichen parallel zur Längsachse des Stellgliedes erstreckende, ringförmige Randflächen ausgebildet, deren widerstandsfähige Schicht nach Art dünner Dichtlippen eine gegenüber der Dicke der übrigen widerstandsfähigen Schicht des Innenraumes vom Gehäuse verminderte Dicke aufweist.

Zur Verminderung dieser Abdichtprobleme ist es aus der nächstliegenden deutschen Auslegeschrift DE-AS 1 947 306 bekannt, die Flanschflächen von miteinander zu verbindenden Rohren konisch einzuformen und wie den Innenraum der Rohre ebenfalls mit einer widerstandsfähigen Schicht zu belegen, deren Dicke entsprechend der konischen Form der Flanschflächen zum Außenrand des Flansches hin abnimmt. Nachteilig bei dieser bekannten Ausgestaltung einer Verbindung zwischen zwei Anschlußflanschen ist neben den hohen Anforderungen an die Fertigungsgenauigkeit bei der Herstellung der konischen Einformung auf den Flanschflächen, daß auch bei dieser Verbindungsart zweier Flansche die Gefahr besteht, daß die gegenseitige Ausrichtung der Flansche nur mit einer für eine dauerhafte Dichtigkeit unzureichenden Genauigkeit erfolgt.

Aufgabe der Erfindung ist es, im Bereich der Abdichtungsfläche eines Anschlußstutzens gegenüber dem übrigen Gehäuse eine Anlage zu schaffen, die sicherstellt, daß im befestigten Zustand bei hoher Dichtigkeit eine exakte unveränderte Lage des Anschlußstutzens erreicht wird.

Diese Aufgabe wird erfindungsgemäß durch ein Absperrorgan mit den Merkmalen des Anspruchs 1 gelöst.

Damit bilden die widerstandsfähigen Schichten am Rand des Flansches dünne Dichtlippen, in deren Bereich der Kunststoff nicht wegfließen kann und damit einen sicheren unveränderbaren Anschlag bildet. Dies führt dazu, daß die übrigen dicken Bereiche der Kunststoffschichten stets gut abdichten ohne wegfließen zu können. Die hierdurch erreichte definierte Lage des Anschlußstutzens läßt auch eine genauere Lagerung und Abdichtung des Ventilstellgliedes zu. Besonders vorteilhaft ist es hierbei, wenn die an der gegenüberliegenden Randschicht anliegende Dichtfläche der dünnen Randschicht in derselben Ebene oder in einer parallel dazu nur um 0,1 - 2 mm parallel verschobenen Ebene liegt, in der die Dichtfläche der übrigen widerstandsfähigen Schicht des Flansches liegt.

Von Vorteil ist es auch, wenn zur Verklammerung mit dem Trägermaterial die Rückseite der widerstandsfähigen Schicht und/oder der dünnen Randschicht koaxial angeordnete Rillen aufweist. Hierzu wird auch vorgeschlagen, daß die Rippen zwischen den Rillen schräg angeordnet insbesondere sägezahnförmig sind. Ferner können die Rillen ein Plangewinde bilden.

Eine weitere Erhöhung der Abdichtungssicherheit wird dadurch erreicht, wenn auf der Dichtfläche der widerstandsfähigen Schicht nahe der dünnen Randschicht mindestens ein koaxialer ringförmiger Wulst vorspringt, der im abgedichteten Zustand sich in die widerstandsfähige Schicht des anliegenden Flansches eindrückt und dort zu einem Bereich mit erhöhter Flächenpressung führt. Wenn dieser Wulst auf beiden abzudichtenden Flächen angebracht ist und auf unterschiedlichen Durchmessern liegt, ergibt sich eine Labyrinthabdichtung mit Zonen erhöhter Flächenpressung.

Ein Ausführungsbeispiel der Erfindung ist in den Zeichnung in einem koaxialen Schnitt durch einen Kugelhahn in einem Ausschnitt dargestellt und wird im folgenden näher beschrieben.

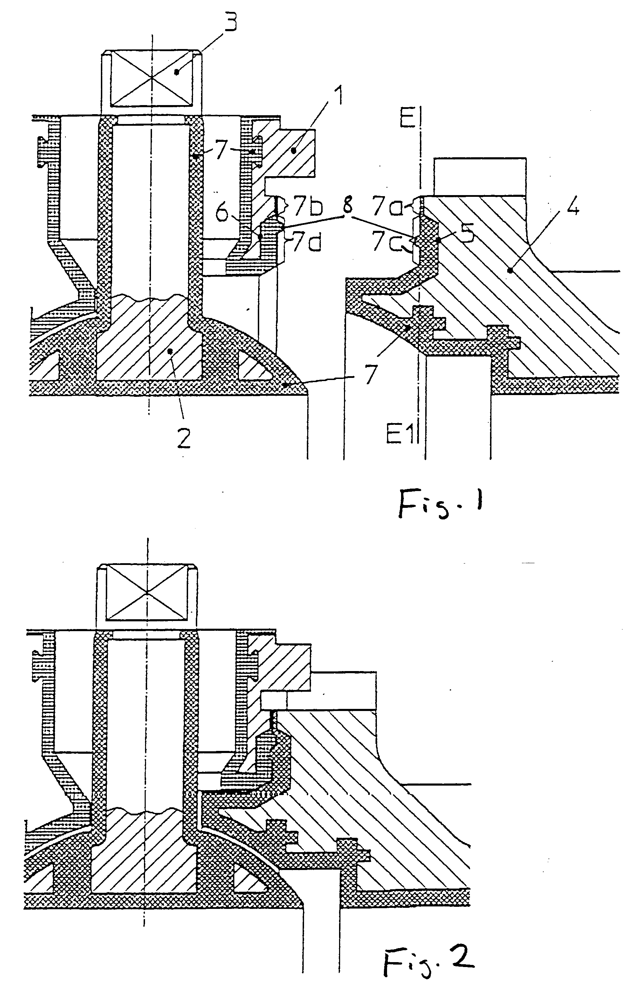

Figur 1 zeigt die Teile im nicht zusammengehobenen Zustand und Figur 2 zeigt die Teile im zusammengehobenen Zustand.

Das Gehäuse 1 eines Absperrorgans insbesondere eines Kugelhahns weist ein Ventilstellglied in Form einer Kugel 2 auf, die durch eine Welle 3 betätigbar ist. Der Innenraum des Gehäuses ist durch einen Anschlußstutzen 4 verschlossen, der auf einem umlaufenden Rand eine Flanschfläche 5 besitzt, die auf einer entsprechend geformten Flanschfläche 6 des Gehäuses 1 aufliegt.

Die Innenflächen des Gehäuseinnenraumes als auch die Innenseite des Anschlußstutzens 4 und die Außenseiten des Ventilstellgliedes sind durch eine widerstandsfähige Schicht 7 aus Kunststoff beschichtet.

Im Bereich der Flanschflächen 5,6 ist die Schicht 7 zum Ende hin dünner ausgeführt, wobei diese zwei dünnen ringförmigen Randschichten 7a,7b der beiden Flanschflächen 5,6 etwa die halbe bis 1/10 Dicke der übrigen Beschichtung besitzen. Die Beschichtungen 7 bilden damit in den Bereichen 7a,7b so dünne Dichtlippen, daß auch bei einem starken Anpressen des Anschlußstutzens 4 am Gehäuse 1 das Kunststoffdichtmaterial in diesem Bereich nicht wegfließen kann.

Die Ebene E, in der die beiden dünneren Schichtbereiche 7a,7b aneinanderanliegen, kann in derselben Ebene E1 liegen, in der im Bereich des Flansches die dickeren Verkleidungsschichten aufeinanderliegen. Alternativ ist es aber auch möglich, daß die Ebene E zur Ebene E1 der dickeren Schichten parallel um 0,1 bis 2 mm verschoben ist.

Die dickeren Bereiche 7c und 7d der Beschichtungen der Flanschflächen bilden mindestens einen koaxialen ringförmigen Wulst 8, der gegenüber der übrigen Schichtoberfläche vorspringt und im abgedichteten Zustand sich in die gegenüberliegende Schicht des anliegenden Flansches eindrückt, um die Dichtigkeit zu erhöhen.

Zur Verklammerung mit dem Trägermaterial weist die Rückseite der widerstandsfähigen Schicht 7 und/oder der dünnen Randschicht 7a,7b koaxial angeordnete Rillen auf. Die Rippen zwischen den Rillen sind schräg angeordnet insbesondere sägezahnförmig. Die Rillen bilden dabei ein Plangewinde.

## Patentansprüche

1. Absperrorgan, insbesondere Kugelhahn, mit einem Stellglied (2), einem das Stellglied (2) umgebenden, eine Flanschfläche (6) aufweisenden Gehäuse und mit einem im am Gehäuse (1) angeschraubten Zustand, dessen Innenraum verschließenden Abschlußstutzen (4), der eine der Flanschfläche (6) des Gehäuses (1) zugeordnete Flanschfläche (5) aufweist und dessen Innenraum und Flanschfläche (5) ebenso wie der Innenraum und die Flanschfläche (6) des Gehäuses (1) mit einer widerstandsfähigen Schicht (7) versehen ist, wobei die Dicke der widerstandsfähigen Schicht der Flanschflächen (5,7) zum Außenrand der jeweiligen Flanschfläche (5, 6) hin abnimmt und die widerstandsfähige Schicht (7a, b) bei an dem Gehäuse (1) angeschlossenen Anschlußstutzen (4) dichtend aufeinanderliegen, **dadurch gekennzeichnet,** daß die Flanschflächen (5, 6) als sich im wesentlichen koaxial zur Längsachse des Stellgliedes (2) erstreckende, ringförmige Randflächen ausgebildet sind, deren widerstandsfähige Schicht (7a, b) nach Art dünner Dichtlippen eine gegenüber der Dicke der übrigen widerstandsfähigen Schicht des Innenraumes von Anschlußstutzen (4) und Gehäuse (1) verminderte Dicke aufweisen, welche insbesondere 1/2 bis 1/10 der Dicke der übrigen widerstandsfähigen Schicht (7) beträgt, wobei jede Flanschfläche (5, 6) zwei parallele und zueinander versetzte Flächen aufweist.

2. Absperrorgan nach Anspruch 1, **dadurch gekennzeichnet,** daß die Ebene (2), in der die Dichtfläche zwischen den dünnen Randschichten (7a, b) der widerstandsfähigen Schicht (7) liegt, mit der Ebene (E1), in der die Dichtfläche zwischen den übrigen widerstandsfähigen Schichten (7) des Flansches liegt, zusammenfällt oder um höchstens 0,1 - 2 mm parallel dazu verschoben ist.

3. Absperrorgan nach Anspruch 1 oder 2, **dadurch gekennzeichnet**, daß zur Verklammerung mit dem Trägermaterial die Rückseite der widerstandsfähigen Schicht (7) und/oder der dünnen Randschicht (7a,7b) koaxial angeordnete Rillen aufweist.

4. Absperrorgan nach Anspruch 3, **dadurch gekennzeichnet,** daß die Rippen zwischen den Rillen schräg angeordnet insbesondere sägezahnförmig sind.

5. Absperrorgan nach Anspruch 3 oder 4, **dadurch gekennzeichnet,** daß die Rillen ein Plangewinde bilden.

6. Absperrorgan nach einem der vorhergehenden Ansprüche, **dadurch gekennzeichnet**, daß auf der Dichtfläche der widerstandsfähigen Schicht (7) nahe der dünnen Randschicht (7a,7b) mindestens ein koaxialer ringförmiger Wulst (8) vorspringt, der im abgedichteten Zustand sich in die widerstandsfähige Schicht des anliegenden Flansches eindrückt.

## Claims

1. A shut-off member, more particularly a ball valve, having an adjusting member (2); a casing (1) enclosing the adjusting member (2) and having a flange facing (6); and a connecting spigot (4) which when screwed to the casing (1) closes its inner space and which has a flange facing (5) associated with the flange facing (6) of the casing (1) and whose inner space and flange facing (5), just like the inner space and the flange facing (6) of the casing (1), has a resistive layer (7), the thickness of the resistive layer of the flange facings (5, 7) decreasing in the direction of the outer edge of the particular flange facing (5, 6), and the resistive layers (7a, 7b) bearing sealably against one another with the connective spigot (4) connected to the casing (1), characterized in that the flange facings (5, 6) take the form of annular edge facings which extend substantially coaxially with the longitudinal axis of the adjusting member (2) and whose resistive layers (7a, 7b) after the fashion of thin sealing lips have a thickness which is reduced in comparison with the thickness of the remaining resistive layers of the inner space of the connecting spigot (4) and the casing (1) and which more particularly amounts to 1/2 to 1/10 of the thickness of the remaining resistive layer (7), each flange facing (5, 6) having two parallel surfaces offset in relation to one another.

2. A shut-off member according to claim 1, characterized in that the plane (2) in which the sealing face lies between the thin edge layers (7a, 7b) of the resistive layer (7) coincides with the plane (E1) in which the sealing face lies between the remaining resistive layers (7) of the flange, or is displaced by at most 0.2 - 2 mm parallel therewith.

3. A shut-off member according to claims 1 or 2, characterized in that for the purpose of clamping to the supporting material, the rear side of the resistive layer (7) and/or the thin edge layers (7a, 7b) is formed with coaxially arranged grooves.

4. A shut-off member according to claim 3, characterized in that the ribs are disposed at an angle between the grooves, being more particularly serrate.

5. A shut-off member according to claims 3 or 4, characterized in that the grooves form a plane threading.

6. A shut-off member according to one of the preceding claims, characterized in that projecting from the sealing face of the resistive layer (7) adjacent the thin edge layers (7a, 7b) is at least one coaxial annular bead (8) which in the sealed condition is pressed into the resistive layer of the adjoining flange.

## Revendications

1. Organe d'arrêt, en particulier robinet à boisseau sphérique, avec un organe final (2), un carter entourant l'organe final (2), présentant une surface de flasque (6), et avec une tubulure d'arrêt (4) fermant son volume intérieur à l'état vissé au carter (1), qui présente une surface de flasque (5) adjointe à la surface de flasque (6) du carter (1) et dont le volume intérieur et la surface de flasque (5) ainsi que le volume intérieur et la surface de flasque (6) du carter (1) sont munis d'une couche résistante (7), l'épaisseur de la couche résistante des surfaces de flasque (5, 7) diminuent en direction du bord extérieur de la surface de flasque (5, 6) respective et les couches résistantes (7a, b) étant en appui étanche l'une sur l'autre lorsque le tubulure d'arrêt (4) est raccordée au carter (1),
caractérisé en ce que les surfaces de flasque (5, 6) sont réalisées sous forme de surfaces de bord annulaires s'étendant sensiblement coaxialement à l'axe longitudinal de l'organe final (2), dont les couches résistantes (7a, b) présentent, à la manière de lèvres d'étanchéité minces, une épaisseur réduite par rapport à l'épaisseur du reste de la couche résistante du volume intérieur de la tubulure d'arrêt (4) et du carter (1), qui est en particulier de 1/2 à 1/10 de l'épaisseur de la couche résistante restante (7), chaque surface de flasque (5, 6) présentant deux surfaces parallèles et décalées l'une par rapport à l'autre.

2. Organe d'arrêt selon la revendication 1,
caractérisé en ce que le plan (2) dans lequel se trouve la surface d'étanchéité entre les couches de bord minces (7a, b), de la couche résistante (7) coïncide avec le plan (E1) dans lequel se trouve la surface d'étanchéité entre les couches résistantes (7) restantes du flasque ou est décalée parallèlement à celui-ci d'au plus 0,1-2 mm.

3. Organe d'arrêt selon la revendication 1 ou 2,
caractérisé en ce que, pour l'agrafage avec la base, la face arrière de la couche résistante (7) et/ou des couches de bord minces (7a, 7b) présente des rainures disposées coaxialement.

4. Organe d'arrêt selon la revendication 3,
caractérisé en ce que les nervures entre les rainures sont disposées obliques, en particulier en forme de dents de scie.

5. Organe d'arrêt selon la revendication 3 ou 4,
caractérisé en ce que les rainures forment un filetage plan.

6. Organe d'arrêt selon l'une des revendications précédentes,
caractérisé en ce que, sur la surface d'étanchéité de la couche résistante (7) au voisinage de la couche de bord mince (7 a, 7b) au moins un bourrelet annulaire coaxial (8) fait saillie qui, à l'état d'étanchéité, s'imprime dans la couche résistante du flasque en appui.
